(19) Europäisches Patentamt
European Patent Office
Office européen des brevets

(11) **EP 4 418 592 A1**

(12) **EUROPEAN PATENT APPLICATION**

(43) Date of publication:
**21.08.2024 Bulletin 2024/34**

(21) Application number: **24152559.1**

(22) Date of filing: **18.01.2024**

(51) International Patent Classification (IPC):
**H04L 5/00** (2006.01)     **H04L 27/26** (2006.01)
**H04W 72/0446** (2023.01)     **H04W 92/18** (2009.01)
**H04W 64/00** (2009.01)

(52) Cooperative Patent Classification (CPC):
**H04L 5/0048; H04L 5/0094; H04L 27/2613;**
H04W 64/00; H04W 92/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2023 FI 20235160**

(71) Applicant: **Nokia Technologies Oy
02610 Espoo (FI)**

(72) Inventors:
• **KEATING, Ryan
Chicago (US)**
• **CHA, Hyun-Su
Chicago (US)**

(74) Representative: **Nokia EPO representatives
Nokia Technologies Oy
Karakaari 7
02610 Espoo (FI)**

(54) **GENERATION OF SIDELINK POSITIONING REFERENCE SIGNAL RESOURCE SEQUENCE**

(57)     There is provided an apparatus comprising: at least one processor; and at least one memory storing instructions that, when executed by the at least one processor, cause the apparatus, which is configured to perform sidelink positioning with another apparatus, at least to perform: transmitting, to the other apparatus, an indication that a sidelink positioning reference signal, SL PRS, resource transmission, which the apparatus is configured to transmit, comprises at least one de-modulation reference signal, DMRS, symbol; and generating a sequence of a SL PRS resource transmission comprising: a SL PRS sequence; and a DMRS sequence comprising at least one DMRS symbol; and transmitting the sequence of the SL PRS resource transmission at least to the other apparatus.

Fig. 2

**Description**

FIELD

Various example embodiments relate to generation of sidelink positioning reference signals (SL PRSs).

BACKGROUND

In sidelink communication, user equipments may communicate with each other without involvement of a network node. In sidelink positioning, sidelink communication is used for sending and receiving sidelink positioning reference signals (SL PRSs), and measurements on these signals may be used for positioning of a user equipment.
SL PRSs may be transmitted on dedicated resources and/or shared resources.

SUMMARY

According to some aspects, there is provided the subject-matter of the independent claims. Some example embodiments are defined in the dependent claims. The scope of protection sought for various example embodiments is set out by the independent claims. The example embodiments and features, if any, described in this specification that do not fall under the scope of the independent claims are to be interpreted as examples useful for understanding various example embodiments.
According to an aspect there is provided a method comprising: transmitting, by an apparatus, which is configured to perform sidelink positioning with another apparatus, to the other apparatus, an indication that a sidelink positioning reference signal, SL PRS, resource transmission, which the apparatus is configured to transmit, comprises at least one de-modulation reference signal, DMRS, symbol; and generating a sequence of a SL PRS resource transmission comprising: a SL PRS sequence; and a DMRS sequence comprising at least one DMRS symbol; and transmitting the sequence of the SL PRS resource transmission at least to the other apparatus. The method may be performed by a user equipment, e.g. an anchor user equipment.
According to an embodiment, the generating the sequence of the SL PRS resource transmission comprises: generating the SL PRS sequence of length of the SL PRS resource, the SL PRS sequence comprising a plurality of symbols; generating the DMRS sequence comprising at least one DMRS symbol; replacing at least one symbol of the SL PRS sequence by the DMRS sequence to obtain the sequence of the SL PRS resource transmission.
According to an embodiment, the generating the sequence of the SL PRS resource transmission comprises: generating the DMRS sequence of a first length in symbols; generating the SL PRS sequence of a second length in symbols, wherein the second length is obtained by subtracting the first length from the length of the SL PRS resource; combining the SL PRS sequence and the DMRS sequence to obtain the sequence of the SL PRS resource transmission.
According to an embodiment, the method comprises: transmitting the sequence of the SL PRS resource transmission on a shared resource pool.
According to an embodiment, the method comprises: transmitting, to the other apparatus, an indication on a position of the at least one DMRS symbol in the sequence of the SL PRS resource transmission.
According to an embodiment, the DMRS sequence and the SL PRS sequence are generated using same or similar sequence initialization equation.
According to an embodiment, the DMRS sequence and the SL PRS sequence are generated using a DMRS sequence initialization equation.
According to an embodiment, the DMRS sequence is generated using a first identity value and the SL PRS sequence is generated using a second identity value.
According to an aspect, there is provided an apparatus comprising means for performing the method of the aspect above and any of the embodiments thereof. The apparatus may be a user equipment, e.g. an anchor user equipment.
According to an embodiment, the means comprises at least one processor; and at least one memory storing instructions that, when executed by the at least one processor, cause the performance of the apparatus. The apparatus may be a user equipment, e.g. an anchor user equipment.
According to an aspect, there is provided a (non-transitory) computer readable medium comprising instructions that when executed by an apparatus, cause the apparatus to perform the method of the aspect above and any of the embodiments thereof. The apparatus may be a user equipment, e.g. an anchor user equipment.
According to an aspect, there is provided a computer program comprising instructions, which, when executed by an apparatus, cause the apparatus to perform the method of the aspect above and any of the embodiments thereof. The apparatus may be a user equipment, e.g. an anchor user equipment.
According to an aspect, there is provided a method comprising: receiving, by an apparatus, which is configured to perform sidelink positioning with another apparatus, from the other apparatus, an indication that a sidelink positioning reference signal, SL PRS, resource transmission, which the apparatus is configured to receive, comprises at least one de-modulation reference signal, DMRS, symbol; and receiving the SL PRS resource transmission comprising: a SL PRS sequence; and a DMRS sequence comprising at least one DMRS symbol. The method may be performed by a user equipment, e.g. a target user equipment.

According to an embodiment, the method comprises: receiving the SL PRS resource transmission on a shared resource pool.

According to an embodiment, the method comprises: performing a sidelink positioning measurement based on the SL PRS resource transmission.

According to an embodiment, the method comprises: combining the received DMRS sequence with the received SL PRS sequence to a combined SL PRS sequence; and determining position of the apparatus based on the combined SL PRS sequence.

According to an embodiment, the method comprises: receiving, from the other apparatus, an indication on a position of the at least one DMRS symbol in the SL PRS resource transmission.

According to an aspect, there is provided an apparatus comprising means for performing the method of the aspect above and any of the embodiments thereof. The apparatus may be a user equipment, e.g. a target user equipment.

According to an embodiment, the means comprises at least one processor; and at least one memory storing instructions that, when executed by the at least one processor, cause the performance of the apparatus. The apparatus may be a user equipment, e.g. a target user equipment.

According to an aspect, there is provided a (non-transitory) computer readable medium comprising instructions that when executed by an apparatus, cause the apparatus to perform the method of the aspect above and any of the embodiments thereof. The apparatus may be a user equipment, e.g. a target user equipment.

According to an aspect, there is provided a computer program comprising instructions, which, when executed by an apparatus, cause the apparatus to perform the method of the aspect above and any of the embodiments thereof. The apparatus may be a user equipment, e.g. a target user equipment.

BRIEF DESCRIPTION OF THE DRAWINGS

Some example embodiments will now be described with reference to the accompanying drawings.

Fig. 1 shows, by way of example, a network architecture of communication system;

Fig. 2 shows, by way of example, a sidelink positioning session between entities;

Fig. 3 shows, by way of example, a flowchart of a method;

Fig. 4 shows, by way of example, a flowchart of a method; and

Fig. 5 shows, by way of example, a block diagram of an apparatus.

DETAILED DESCRIPTION

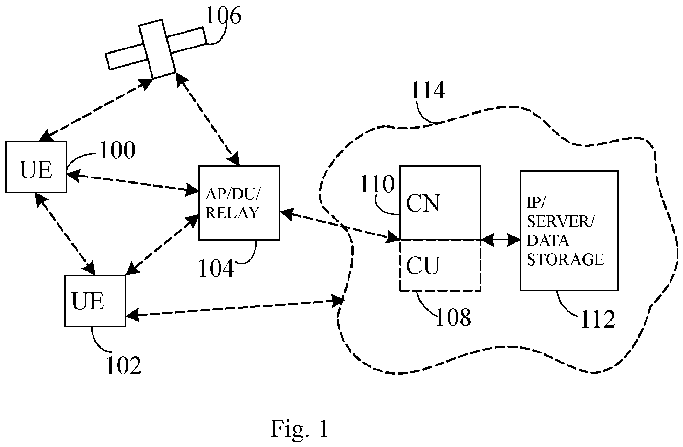

Fig. 1 shows, by way of an example, a network architecture of communication system. In the following, different exemplifying embodiments will be described using, as an example of an access architecture to which the embodiments may be applied, a radio access architecture based on long term evolution advanced (LTE Advanced, LTE-A) or new radio (NR), also known as fifth generation (5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

The example of Fig. 1 shows a part of an exemplifying radio access network. Fig. 1 shows user devices or user equipments (UEs) 100 and 102 configured to be in a wireless connection on one or more communication channels in a cell with an access node, such as gNB, i.e. next generation NodeB, or eNB, i.e. evolved NodeB (eNodeB), 104 providing the cell. The physical link from a user device to the network node is called uplink (UL) or reverse link and the physical link from the network node to the user device is called downlink (DL) or forward link. It should be appreciated that network nodes or their functionalities may be implemented by using any node, host, server or access point etc. entity suitable for such a usage. A communications system typically comprises more than one network node in which case the network nodes may also be configured to communicate with one another over links, wired or wireless, designed for the purpose. These links may be used for signalling purposes. The network node is a computing device configured to control the radio resources of the communication system it is coupled to. The network node may also be referred to as a base station (BS), an access point or any other type of interfacing device including a relay station capable of operating in a wireless environment. The network node includes or is coupled to transceivers. From the transceivers of the network node, a connection is provided to an antenna unit that establishes bi-directional radio links to user devices. The antenna unit may comprise a plurality of antennas or antenna elements. The network node is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. An example of the network node configured to operate as a relay station is integrated access and backhaul node (IAB). The distributed unit (DU) part of the IAB node performs BS functionalities of the IAB node, while the backhaul connection is carried out by the mobile termination (MT) part of the IAB node. UE functionalities may be carried out by IAB MT, and BS functionalities may be carried out by IAB DU. Network architecture may comprise a parent node, i.e. IAB donor, which may have wired connection with the CN, and wireless connection with the IAB MT.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

Additionally, although the apparatuses have been depicted as single entities, different units, processors and/or memory units (not all shown in Fig. 1) may be implemented inside these apparatuses, to enable the functioning thereof.

5G enables using multiple input - multiple output (MIMO) technology at both UE and gNB side, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 7GHz - cmWave, below 7GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at the RAN side (in a distributed unit, DU 104) and non-real time functions being carried out in a centralized manner (in a centralized unit, CU 108).

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the constellation may cover several satellite-enabled network entities that create on-ground cells. The on-ground cells may be created through an on-ground relay node 104 or by a gNB located on-ground or in a satellite.

In sidelink communication, the UEs, e.g. UE 100 and UE 102 of Fig. 1, may communicate with each other without involvement of a network node 104. In sidelink positioning, sidelink communication is used for sending and receiving sidelink positioning reference signals (SL PRSs), and measurements on these signals may be used for positioning of UE. The measurements may be based on time of arrival (TooA), round trip time, angle of arrival / angle of departure (AoA/AoD), reference signal time difference (RSTD), for example.

Sidelink (SL) positioning may provide absolute position or relative position of a UE, which may be referred to as a target UE. The anchor UE assists the target UE in positioning. When absolute position is determined, the longitude and latitude coordinates of a UE are calculated. Coordinates of an anchor UE need to be known in absolute positioning.
Distance between UEs and angle between UEs may be calculated in relative positioning. The UE may be a stationary UE or a moving UEs. Relative positioning may be also referred to as ranging. In relative positioning, it is not necessary to know the coordinates of the anchor UE.
When the network node allocates resources for SL positioning, the resources may be dedicated resources and/or shared resources. A shared resource pool may be a resource pool that may be used for communication and positioning. It has been agreed that shared resources pool(s) are to be supported with backward compatibility. Shared resources may be used by legacy UEs (i.e., pre-Rel-18 UEs) and release 18 (Rel-18) UEs, and possibly by UEs that are configured according to subsequent releases of the same standards, for example.
When UE is operating outside of the coverage area of a network node (mode 2), the UE may use sensing to determine which resource may be available for selection. For example, layer 1 side link reference signal received power (SL-RSRP) measurement may be performed by the UE based on SL de-modulation reference signal (DMRS).
A legacy UE, which is configured to operate on shared resource pool, might not be able to receive SL positioning reference signals (SL PRSs), but it rather may try to avoid the SL PRS slots and/or to minimize the impact of the SL PRS on its own communication. However, a legacy UE may rely on SL-RSRP measurements. Thus, it may be desirable for the legacy UE to be able to measure the RSRP of the SL PRS transmissions.
Method(s) are provided to enable legacy UE to measure RSRP of the SL PRS despite not being able to measure the SL PRS itself, and to enable efficient use of resources.

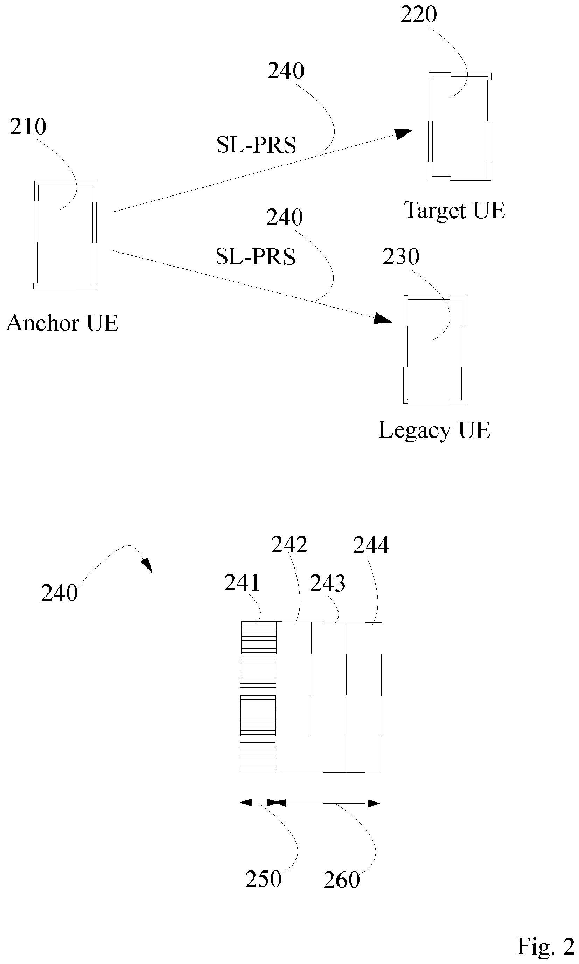

Fig. 2 shows, by way of example, a sidelink positioning session between entities. A UE, e.g. anchor UE 210 or a first UE, may be involved in a SL positioning session with at least one target UE 220 or second UE. The target UE 220 may be, for example, configured to operate according to Rel-18. The anchor UE 210 is configured to transmit SL PRSs 240 to other UEs.
The SL PRSs 240 may be transmitted on shared resources or may be transmitted on dedicated resources. Thus, in addition to the target UEs 220 using the SL PRSs 240 for positioning, there may be legacy UEs 230 configured to measure the RSRP of the SL PRS transmissions, for example.
The SL PRS resource 240 may comprise at least one de-modulation reference signal, DMRS, symbol. As part of the SL PRS sequence generation, the anchor UE 210 may use DMRS sequence generation to map the DMRS sequence inside the PRS sequence. The anchor UE 210 is configured to generate a sequence of SL PRS resource transmission 240, which comprises a SL PRS sequence 260 and a DMRS sequence 250. The sequence of SL PRS resource transmission 240 comprises a plurality of symbols 241, 242, 243, 244, e.g. 4 symbols. Herein the sequence of SL PRS resource transmission 240 may sometimes be referred to as a full sequence. For example, full sequence may refer to full PRS resource available or configured. Full sequence should be understood as an illustrative example to describe the SL PRS resource transmission's length in case DMRS symbol(s) are not transmitted or do not need to be transmitted. In such case the SL PRS sequence to be transmitted may be of full length, wherein the full length is length that is set by available resource or it could be a configured value, e.g. a number of symbols. However, as the DMRS symbol(s) are included to the PRS resource to be transmitted, the SL PRS sequence 260 may thus not be of said full length as the DMRS symbol(s) occupy some of the SL PRS resource. The DMRS sequence 250 may comprise at least one symbol, e.g. symbol 241. Said at least one symbol may be referred to as at least one DMRS symbol. The SL PRS sequence 260 may comprise one or more symbols. Said one or more symbols may be referred to as one or more PRS symbols or SL PRS symbols. For example, the sequence 260 may comprise three (3) symbols, e.g. symbols 242, 243, 244. Thus, for example, the generated and transmitted SL PRS resource 240 may comprise two or more SL PRS symbols (e.g. sequence 260 of three SL PRS symbols) and at least one DMRS symbol (e.g. sequence 250 of one DMRS symbol).
The legacy UE 230 may measure the RSRP on the at least one DMRS symbol 241 of the SL PRS resource 240 to determine sensing information without affecting the legacy performance.
Number of the symbols in the SL PRS sequence may be, for example, 1, 2, 3, 4, 6, 8 or 12. Number of the symbols in the DMRS sequence may be, for example, 1, 2, 4 or 6.

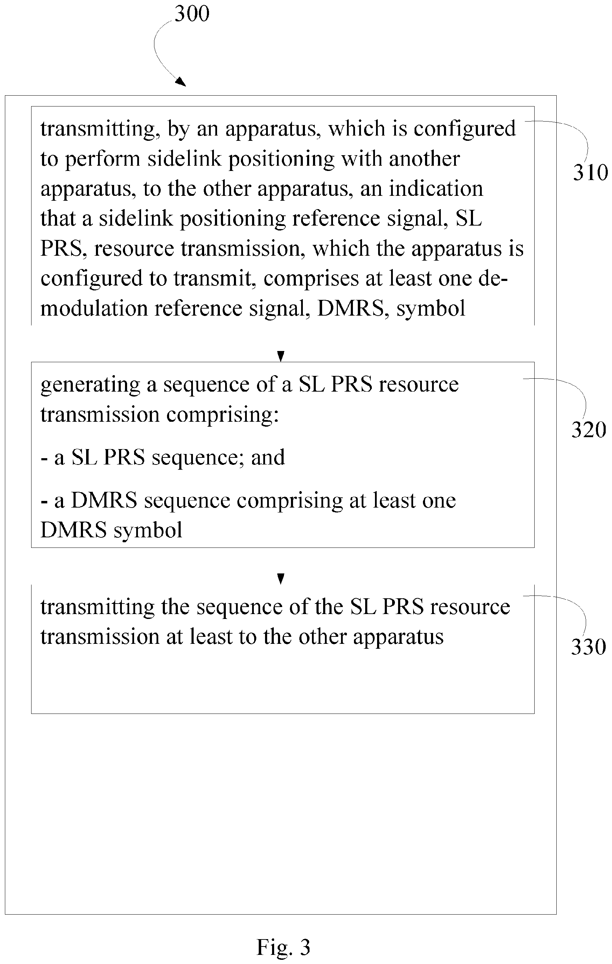

Fig. 3 shows, by way of example, a flowchart of a method 300. The phases of the illustrated method may be performed by a UE, or by a control device configured to control the functioning thereof, when installed therein. The UE may be, for example, the anchor UE 210 of Fig. 2, which is configured to perform at least the method 300. The method 300 comprises transmitting 310, by an apparatus (e.g. anchor UE 210), which is configured to perform sidelink positioning with another apparatus (e.g. target UE 220), to the other apparatus, an indication that a sidelink positioning reference signal, SL PRS, resource transmission, which the apparatus is configured to transmit, comprises at least one de-modulation reference signal, DMRS, symbol. The method 300 comprises generating 320 a sequence of a SL PRS resource transmission comprising: a SL PRS sequence; and a DMRS sequence comprising at least one DMRS symbol. The method 300 comprises transmitting 330 the sequence of the SL PRS resource transmission at least to the other apparatus.

Referring back to Fig. 2, the anchor UE 210 may transmit to the target UE 220 an indication that the UE 210 will use adaptive SL PRS sequence generation, or that the SL PRS resource, which the UE 210 is configured to transmit, comprises at least one DMRS symbol. The indication may be transmitted via SL PRS configuration or higher layer configuration, for example. The target UE 220 is made aware of that the SL PRS resource 240, which it will receive from the anchor UE 210, comprises at least one DMRS symbol.

The SL PRS resource transmission may be generated in many ways. For example, the UE 210 may generate a full sequence of the SL PRS resource, or in other words, the SL PRS resource of length of the full sequence. The full sequence comprises a plurality of symbols, e.g. 4 symbols as in Fig. 2. The UE may generate the DMRS sequence 250 comprising at least one DMRS symbol, e.g. symbol 241. Then, the UE may replace at least one symbol of the SL PRS sequence, having the length of the full sequence, by the DMRS sequence 250. The number of replaced symbols depends on the number of symbols in the DMRS sequence, which may be pre-configured or configured by the network. The resulting full sequence 240 comprises the SL PRS sequence 260 and the DMRS sequence 250.

As another example, the UE may generate the DMRS sequence 250 of a first length in symbols, or having the first length measured in symbols. Length of the DMRS sequence may be, for example, 1 symbol. Length of the SL PRS sequence 260, e.g. a second length, may be determined or calculated by subtracting the first length from the length of the full sequence of the SL PRS resource. For example, if the full sequence is 4 symbols long, and the DMRS sequence 250 has 1 symbol, then the second length is 3 symbols. Then, the UE may combine the SL PRS sequence 260 and the DMRS sequence 250 to obtain the full sequence of the SL PRS resource. The resulting full sequence 240 comprises the SL PRS sequence 260 and the DMRS sequence 250.

In addition to the target UE being aware of the SL PRS resource comprising at least one DMRS symbol, the UE may be made aware of the order of the symbols. For example, the anchor UE may transmit, to the target UE, an indication on a position of the at least one DMRS symbol in the full sequence of the SL PRS resource.

For example, the first symbol 241 may be configured as SL DMRS symbol. The legacy UE 230 may understand that the SL DMRS is in the same symbol as a physical sidelink shared channel (PSSCH) transmission, even it is not able to read SL PRS. The legacy UE 230 may assume that the DMRS is in a given symbol on a slot or sub-slot, which is reserved.

As another example, the first symbol may be configured as SL PRS symbol to another Rel-18 UE (e.g., target UE 220). The target UE 220, e.g. release 18 UE, may know that the DMRS symbol is included in the SL PRS sequence.

The SL PRS sequence may be generated, for example, similar to a DL PRS generation formula defined in specification 38.211, version 17.4.0, in section 7.4.1.7.2. The UE may assume the reference-signal sequence $r(m)$ is defined by

$$r(m) = \frac{1}{\sqrt{2}}\big(1 - 2c(2m)\big) + j\frac{1}{\sqrt{2}}\big(1 - 2c(2m+1)\big)$$

where the pseudo-random sequence $c(i)$ may be defined by pseudo-random sequence generation, e.g. by a Gold sequence. The output sequence $c(n)$ of length $M_{PN}$, where $n = 0, 1, \ldots, M_{PN} - 1$, may be defined by

$$c(n) = \big(x_1(n + N_C) + x_2(n + N_C)\big)mod2$$

$$x_1(n + 31) = \big(x_1(n + 3) + x_1(n)\big)mod2$$

$$x_2(n + 31) = \big(x_2(n + 3) + x_2(n + 2) + x_2(n + 1) + x_2(n)\big)mod2$$

where $N_C = 1600$ and the first m-sequence $x_1(n)$ may be initialized with $x_1(0) = 1$, $x_1(n) = 0$, n = 1, 2, ... , 30. The initialization of the second m-sequence, $x_2(n)$, is denoted by $c_{init} = \sum_{i=0}^{30} x_2(i) \cdot 2^i$ with the value depending on the application of the sequence.

The pseudo-random sequence generator may be initialised with

$$c_{\text{init}} = \left( 2^{22} \left\lfloor \frac{n_{\text{ID,seq}}^{\text{PRS}}}{1024} \right\rfloor + 2^{10} \left( N_{\text{symb}}^{\text{slot}} n_{\text{s,f}}^{\mu} + l + 1 \right) \left( 2 \left( n_{\text{ID,seq}}^{\text{PRS}} \bmod 1024 \right) + 1 \right) + \right.$$

$$\left. \left( n_{\text{ID,seq}}^{\text{PRS}} \bmod 1024 \right) \right) \bmod 2^{31} \qquad \text{(initialization equation of DL PRS sequence)}$$

where $n_{\text{s,f}}^{\mu}$ is the slot number, the downlink PRS sequence ID $n_{\text{ID,seq}}^{\text{PRS}} \in \{0,1, ...,4095\}$ may be given by the higher-layer parameter *dl-PRS-SequenceID,* and *l* is the orthogonal frequency-division multiplexing (OFDM) symbol within the slot to which the sequence is mapped.

The DMRS sequence may be generated, for example, based on SL DMRS sequence generation formula defined in specification 38.211, version 17.4.0, in section 8.4.1.1.1. The sequence $r_l(m)$ may be generated according to

$$r_l(m) = \frac{1}{\sqrt{2}} \left( 1 - 2c(2m) \right) + j \frac{1}{\sqrt{2}} \left( 1 - 2c(2m + 1) \right)$$

where the pseudo-random sequence $c(m)$ may be defined as above by pseud-random sequence generation. The pseudo-random sequence generator may be initialized with

$$c_{\text{init}} = \left( 2^{17} \left( N_{\text{symb}}^{\text{slot}} n_{\text{s,f}}^{\mu} + l + 1 \right) \left( 2N_{\text{ID}} + 1 \right) + 2N_{\text{ID}} \right) \bmod 2^{31} \qquad \text{(initialization}$$

equation of DMRS sequence)

where *l* is the OFDM symbol number within the slot, $n_{\text{s,f}}^{\mu}$ is the slot number within a frame, and $N_{\text{ID}} = N_{\text{ID}}^{\text{X}} \bmod 2^{16}$ where the quantity $N_{\text{ID}}^{\text{X}}$ equals the decimal representation of cyclic redundancy check (CRC) on the physical sidelink control channel (PSCCH) associated with the physical sidelink shared channel (PSSCH) according to $N_{\text{ID}}^{\text{X}} = \sum_{i=0}^{L-1} p_i \cdot 2^{L-1-i}$ with parity bits *p* and number of parity bits *L*.

The entire payload may be used to calculate the CRC parity bits. Denote the bits of the payload by $a_0$, $a_1$, $a_2$, $a_3$, ... , $a_{A-1}$, and the parity bits by $p_0$, $p_1$, $p_2$, $p_3$, ... , $p_{L-1}$, where *A* is the payload size and *L* is the number of parity bits. Let $a_0', a_1', a_2', a_3', ..., a_{A+L-1}'$ be a bit sequence such that $a_i' = 1$ for *i* = 0,1, ..., *L* - 1 and $a_i' = a_{i-L}$ for *i* = *L,* *L* + 1, ... , *A* + *L* - 1. The parity bits are computed with input bit sequence $a_0', a_1', a_2', a_3', ..., a_{A+L-1}'$ and attached by setting *L* to 24 bits and using the generator polynomial $g_{CRC24C}(D)$. The output bit $b_0$, $b_1$, $b_2$, $b_3$, ... , $b_{K-1}$ is

$$b_k = a_k \text{ for } k = 0, 1, 2, ..., A - 1$$

$$b_k = p_{k-A} \text{ for } k = A, A+1, A+2, \dots, A+L-1,$$

where $K = A + L$.

After attachment, the CRC parity bits are scrambled with the corresponding radio network temporary identifier, RNTI $x_{rnti,0}, x_{rnti,1}, \dots, x_{rnti,15}$, where $x_{rnti,0}$ corresponds to the most significant bit (MSB) of the RNTI, to form the sequence of bits $c_0, c_1, c_2, c_3, \dots, c_{K-1}$. The relation between $c_k$ and $b_k$ is:

$$c_k = b_k \text{ for } k = 0, 1, 2, \dots, A+7$$

$$c_k = \left(b_k + x_{rnti,k-A-8}\right) mod 2 \text{ for } k = A+8, A+9, A+10, \dots, A+23.$$

The sequence generation of the SL DMRS and the SL PRS have different initializations, c_init.

According to an embodiment, the DMRS sequence and the SL PRS sequence may be generated using same or similar sequence initialization equation. For example, the DMRS sequence and the SL PRS sequence may be generated using the DMRS sequence initialization equation. By re-using the DMRS sequence initialization equation to the SL PRS sequence initialization, a similar or the same SL PRS sequence is achieved as the current SL DMRS sequence for the symbols where the SL DMRS would be allocated if PSSCH was transmitted to the legacy UE. The Rel-18 UE is able to measure a SL-PRS RSRP from the whole sequence (DMRS symbols and SL PRS symbols). The legacy UE might not know that the DMRS symbols are configured among the SL PRS symbols, but may still perform RSRP measurement on the at least one DMRS symbol of the SL PRS resource.

For example, the anchor UE may use the DMRS sequence initialization equation to generate both the DMRS sequence and the SL PRS sequence. In generation of the DMRS sequence, the initialization equation may use a first identity value, e.g. $N_{ID}^X$ or $N_{ID}$, as defined above for identity of the DMRS sequence. In generation of the SL PRS sequence, the initialization equation may use a second identity value.

The first identity value is a different value than the second identity value. The first identity value and the second identity value are different values. Different identity values may be used in the initialization equation to randomize interference.

The second identity value may be, for example, a parameter value configured by network, e.g. via higher layer signalling.

For example, the second identity value may be determined as a function of SL PRS identity (ID). For example, a configured second identity value be may equal to SL PRS ID.

As a further example, a configured second identity value may be selected as a randomly assigned value between 0 - 65536.

As a further example, a configured second identity value may be selected as a UE unique assigned value between 0 - 65536.

As a further example, a configured second identity value may be determined as a function of other UE IDs.

As a further example, the second identity value may follow a similar principle as other sidelink reference signals. For example, $N_{ID}$ of CSI-RS may depend on the CRC for sidelink control information mapped to PSCCH associated with the CSI-RS.

If the comb-size or comb-offset of the configured SL PRS resource is different than the comb-size and comb-offset of the DMRS configuration, the UE may follow the DMRS configuration.

If is the second identity value is not configured or otherwise determined e.g. according to above examples, the identity of the DMRS sequence may be used as an identity of the SL PRS sequence, where the identity of the DMRS sequence may be defined as $N_{ID}^X$ or $N_{ID}$.

The UE 210 may transmit the full sequence of the SL PRS resource 240 on a shared resource pool.

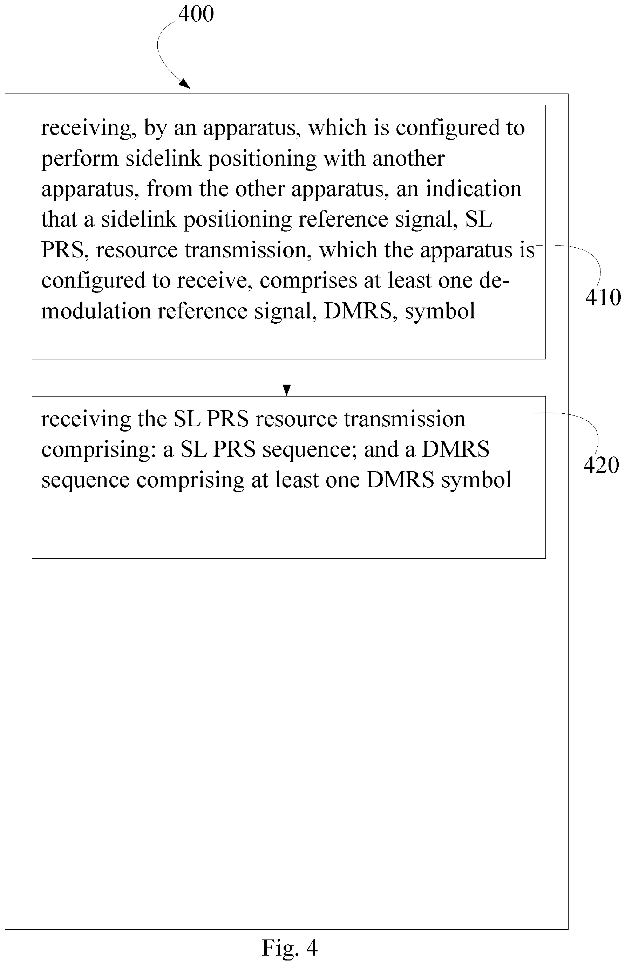

Fig. 4 shows, by way of example, a flowchart of a method 400. The phases of the illustrated method may be performed by a UE, or by a control device configured to control the functioning thereof, when installed therein. The UE may be, for example, the target UE 220 of Fig. 2, which is configured to perform at least the method 400. The method comprises receiving 410, by an apparatus (e.g. the target UE 220), which is configured to perform sidelink positioning with another apparatus (e.g. the anchor UE 210), from the other apparatus, an indication that a sidelink positioning reference signal, SL PRS, resource transmission, which the apparatus is configured to receive, comprises at least one de-modulation reference signal, DMRS, symbol. The method 400 comprises receiving 420 the SL PRS resource transmission comprising: a SL PRS sequence; and a DMRS sequence comprising at least one DMRS symbol.

The target UE receives the indication that the SL PRS resource transmission, which it will receive, comprises at least one DMRS symbol. The indication may be transmitted via SL PRS configuration or higher layer configuration, for example.

The target UE may be aware of the order of the symbols. For example, the target UE may receive an indication on a position of the at least one DMRS symbol in the SL PRS resource transmission.

The target UE understands the received SL PRS resource comprising the SL PRS sequence and the DMRS sequence. SL PRS sequence and the DMRS sequence are both pseudo-random sequences, and therefore, the change in the performance of the target UE is minimal compared to receiving a long SL PRS sequence without any DMRS symbols.

The target UE may perform SL positioning measurement based on the received SL PRS resource. The target UE is able to employ the full sequence for positioning even though at least one symbol of the sequence is a DMRS symbol. The target UE may combine the received DMRS sequence with the received SL PRS sequence to a combined SL PRS sequence. The target UE may determine its position based on the combined SL PRS sequence.

For example, the target UE may generate a local copy of a reference SL PRS sequence before performing cross-correlation (or other positioning measurement processing) between the reference signal and the received SL PRS, and include the DMRS sequence as part of the overall local copy. For example, in this process, the target UE may utilize information on the initialization equation and information on the identity values used, by the anchor UE, in generating the sequences. For example, the target UE may acquire information on the identity values similarly as the anchor UE.

The method(s) as disclosed herein provide improved SL positioning sensing for resource reservation, reduced SL PRS interference, backwards compatible design, and efficient use of sidelink control information (SCI) bits or resources. SL PRS interference may be reduced compared to configuring SL PRS sequence and DMRS sequence, which are different from each other, on the same symbols.

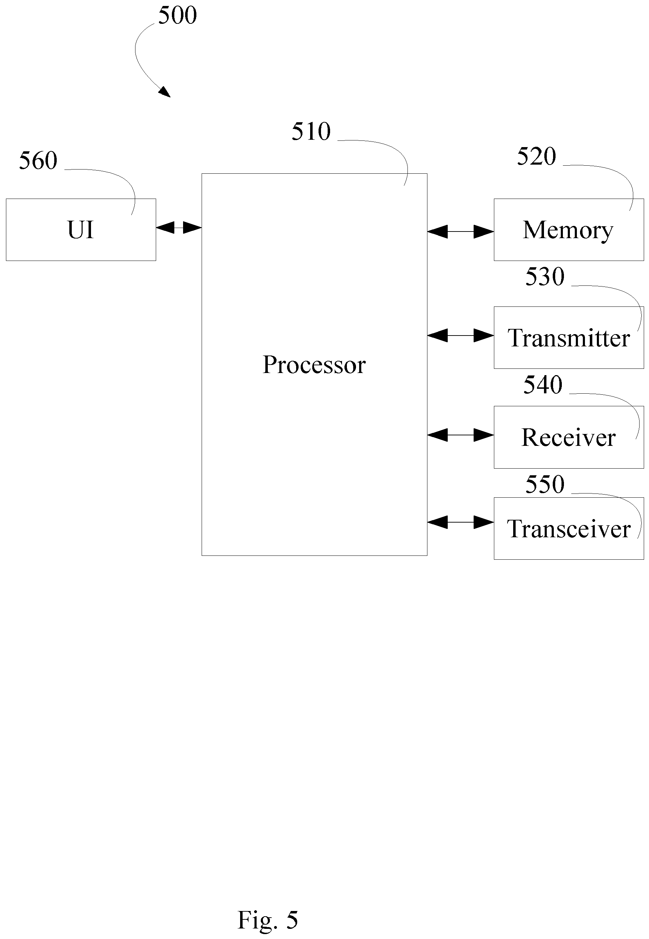

Fig. 5 shows, by way of example, an apparatus capable of performing the method(s) as disclosed herein. Illustrated is device 500, which may comprise, for example, a user equipment, such as an anchor UE 210 of Fig. 2, or a target UE 220 of Fig. 2. Comprised in device 500 is processor 510, which may comprise, for example, a single- or multi-core processor wherein a single-core processor comprises one processing core and a multi-core processor comprises more than one processing core. Processor 510 may comprise, in general, a control device. Processor 510 may comprise more than one processor. Processor 510 may be a control device. Processor 510 may comprise at least one application-specific integrated circuit, ASIC. Processor 510 may comprise at least one field-programmable gate array, FPGA. Processor 510 may be means for performing method steps in device 500. Processor 510 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 500 may comprise memory 520. Memory 520 may comprise random-access memory and/or permanent memory. Memory 520 may comprise at least one RAM chip. Memory 520 may comprise solid-state, magnetic, optical and/or holographic memory, for example. Memory 520 may be at least in part accessible to processor 510. Memory 520 may be at least in part comprised in processor 510. Memory 520 may be means for storing information. Memory 520 may comprise instructions, such as computer instructions or computer program code, that processor 510 is configured to execute. When instructions configured to cause processor 510 to perform certain actions are stored in memory 520, and device 500 overall is configured to run under the direction of processor 510 using instructions from memory 520, processor 510 and/or its at least one processing core may be considered to be configured to perform said certain actions. Memory 520 may be at least in part external to device 500 but accessible to device 500.

Device 500 may comprise a transmitter 530. Device 500 may comprise a receiver 540. Transmitter 530 and receiver 540 may be configured to transmit and receive, respectively, information in accordance with at least one cellular or non-cellular standard. Transmitter 530 may comprise more than one transmitter. Receiver 540 may comprise more than one receiver. Transmitter 530 and/or receiver 540 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 500 may comprise a near-field communication, NFC, transceiver 550. NFC transceiver 550 may support at least one NFC technology, such as NFC, Bluetooth, Wibree or similar technologies.

Device 500 may comprise user interface, UI, 560. UI 560 may comprise at least one of a display, a keyboard, a touchscreen, a vibrator arranged to signal to a user by causing device 500 to vibrate, a speaker and a microphone. A user may be able to operate device 500 via UI 560, for example to accept incoming telephone calls, to originate telephone calls or video calls, to browse the Internet, to manage digital files stored in memory 520 or on a cloud accessible via transmitter 530 and receiver 540, or via NFC transceiver 550, and/or to play games.

Processor 510 may be furnished with a transmitter arranged to output information from processor 510, via electrical leads internal to device 500, to other devices comprised in device 500. Such a transmitter may comprise a serial bus transmitter arranged to, for example, output information via at least one electrical lead to memory 520 for storage therein. Alternatively to a serial bus, the transmitter may comprise a parallel bus transmitter. Likewise processor 510 may comprise a receiver arranged to receive information in processor 510, via electrical leads internal to device 500, from other devices comprised in device 500. Such a receiver may comprise a serial bus receiver arranged to, for example, receive information via at least one electrical lead from receiver 540 for processing in processor 510. Alternatively to a serial bus, the receiver may comprise a parallel bus receiver.

Processor 510, memory 520, transmitter 530, receiver 540, NFC transceiver 550, UI 560 may be interconnected by electrical leads internal to device 500 in a multitude of different ways. For example, each of the aforementioned devices may be separately connected to a master bus internal to device 500, to allow for the devices to exchange information. However, as the skilled person will appreciate, this is only one example and depending on the embodiment various ways of interconnecting at least two of the aforementioned devices may be selected.

According to an example, there is provided an apparatus comprising means for transmitting, to another apparatus, an indication that a sidelink positioning reference signal (SL PRS) resource transmission, which the apparatus is configured to transmit, comprises at least one de-modulation reference signal (DMRS) symbol; and generating a sequence of a SL PRS resource transmission comprising: a SL PRS sequence; and a DMRS sequence comprising at least one DMRS symbol; and transmitting the sequence of the SL PRS resource transmission at least to said another apparatus.

According to some examples, the means may be further configured to cause performance of any steps described with reference to the apparatus.

According to an example, there is provided an apparatus comprising means for receiving, from another apparatus, an indication that a sidelink positioning reference signal, (SL PRS) resource transmission, which the apparatus is configured to receive, comprises at least one de-modulation reference signal (DMRS) symbol; and receiving, from said another apparatus, the SL PRS resource transmission comprising: a SL PRS sequence; and a DMRS sequence comprising at least one DMRS symbol.

According to some examples, the means may be further configured to cause performance of any steps described with reference to the apparatus.

The term "non-transitory" as used herein, is a limitation of the medium itself (i.e., tangible, not a signal) as opposed to a limitation on data storage persistency (e.g., RAM vs. ROM).

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

**Claims**

1. An apparatus comprising:

   at least one processor; and
   at least one memory storing instructions that, when executed by the at least one processor,
   cause the apparatus, which is configured to perform sidelink positioning with another apparatus, at least to perform:

   transmitting, to the other apparatus, an indication that a sidelink positioning reference signal, SL PRS, resource transmission, which the apparatus is configured to transmit, comprises at least one de-modulation reference signal, DMRS, symbol; and

generating a sequence of a SL PRS resource transmission comprising:

a SL PRS sequence; and
a DMRS sequence comprising at least one DMRS symbol; and

transmitting the sequence of the SL PRS resource transmission at least to the other apparatus.

2. The apparatus of claim 1, wherein the generating the sequence of the SL PRS resource transmission comprises:

generating the SL PRS sequence of length of the SL PRS resource, the SL PRS sequence comprising a plurality of symbols;
generating the DMRS sequence comprising at least one DMRS symbol;
replacing at least one symbol of the SL PRS sequence by the DMRS sequence to obtain the sequence of the SL PRS resource transmission.

3. The apparatus of claim 1, wherein the generating the sequence of the SL PRS resource transmission comprises:

generating the DMRS sequence of a first length in symbols;
generating the SL PRS sequence of a second length in symbols, wherein the second length is obtained by subtracting the first length from the length of the SL PRS resource;
combining the SL PRS sequence and the DMRS sequence to obtain the sequence of the SL PRS resource transmission.

4. The apparatus of any preceding claim, caused to perform:
transmitting the sequence of the SL PRS resource transmission on a shared resource pool.

5. The apparatus of any preceding claim, caused to perform:
transmitting, to the other apparatus, an indication on a position of the at least one DMRS symbol in the sequence of the SL PRS resource transmission.

6. The apparatus of any preceding claim, wherein the DMRS sequence and the SL PRS sequence are generated using same or similar sequence initialization equation.

7. The apparatus of claim 6, wherein the DMRS sequence and the SL PRS sequence are generated using a DMRS sequence initialization equation.

8. The apparatus of claim 7, wherein the DMRS sequence is generated using a first identity value and the SL PRS sequence is generated using a second identity value.

9. An apparatus comprising:

at least one processor; and
at least one memory storing instructions that, when executed by the at least one processor,
cause the apparatus, which is configured to perform sidelink positioning with another apparatus, at least to perform:

receiving, from the other apparatus, an indication that a sidelink positioning reference signal, SL PRS, resource transmission, which the apparatus is configured to receive, comprises at least one de-modulation reference signal, DMRS, symbol; and
receiving the SL PRS resource transmission comprising:

a SL PRS sequence; and
a DMRS sequence comprising at least one DMRS symbol.

10. The apparatus of claim 9, caused to perform:
receiving the SL PRS resource transmission on a shared resource pool.

11. The apparatus of claim 9 or 10, caused to perform:

performing a sidelink positioning measurement based on the SL PRS resource transmission.

**12.** The apparatus of claim 11, caused to perform:

combining the received DMRS sequence with the received SL PRS sequence to a combined SL PRS sequence; and
determining position of the apparatus based on the combined SL PRS sequence.

**13.** The apparatus of any of the claims 9 to 12, caused to perform:
receiving, from the other apparatus, an indication on a position of the at least one DMRS symbol in the SL PRS resource transmission.

**14.** A method, comprising:

transmitting, by an apparatus, which is configured to perform sidelink positioning with another apparatus, to the other apparatus, an indication that a sidelink positioning reference signal, SL PRS, resource transmission, which the apparatus is configured to transmit, comprises at least one de-modulation reference signal, DMRS, symbol; and
generating a sequence of a SL PRS resource transmission comprising:

a SL PRS sequence; and
a DMRS sequence comprising at least one DMRS symbol; and

transmitting the sequence of the SL PRS resource transmission at least to the other apparatus.

**15.** A computer program comprising instructions, which, when executed by an apparatus, which is configured to perform sidelink positioning with another apparatus, cause the apparatus to perform:

transmitting, to the other apparatus, an indication that a sidelink positioning reference signal, SL PRS, resource transmission, which the apparatus is configured to transmit, comprises at least one de-modulation reference signal, DMRS, symbol; and
generating a sequence of a SL PRS resource transmission comprising:

a SL PRS sequence; and
a DMRS sequence comprising at least one DMRS symbol; and

transmitting the sequence of the SL PRS resource transmission at least to the other apparatus.

Fig. 1

220

240

210

SL-PRS

Target UE

240

SL-PRS

230

Anchor UE

Legacy UE

242    244

241    243

240

250    260

Fig. 2

300

transmitting, by an apparatus, which is configured to perform sidelink positioning with another apparatus, to the other apparatus, an indication that a sidelink positioning reference signal, SL PRS, resource transmission, which the apparatus is configured to transmit, comprises at least one de-modulation reference signal, DMRS, symbol

310

generating a sequence of a SL PRS resource transmission comprising:

- a SL PRS sequence; and

- a DMRS sequence comprising at least one DMRS symbol

320

transmitting the sequence of the SL PRS resource transmission at least to the other apparatus

330

Fig. 3

400

receiving, by an apparatus, which is configured to perform sidelink positioning with another apparatus, from the other apparatus, an indication that a sidelink positioning reference signal, SL PRS, resource transmission, which the apparatus is configured to receive, comprises at least one de-modulation reference signal, DMRS, symbol

410

receiving the SL PRS resource transmission comprising: a SL PRS sequence; and a DMRS sequence comprising at least one DMRS symbol

420

Fig. 4

Fig. 5

Europäisches
Patentamt

European
Patent Office

Office européen
des brevets

# EUROPEAN SEARCH REPORT

**Application Number**

EP 24 15 2559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/011347 A1 (DATANG GOHIGH INTELLIGENT AND CONNECTED TECH CHONGQING CO LTD [CN]) 9 February 2023 (2023-02-09) * paragraphs 47-49, 56, 121, 129, 131, 133-134, 140, 148-149, 160, 281; figure 10 * ----- | 1-15 | INV. H04L5/00 H04L27/26 H04W72/0446 H04W92/18 ADD. H04W64/00 |
| A | OPPO: "Discussion on potential solutions for SL positioning", 3GPP DRAFT; R1-2211447; TYPE DISCUSSION; FS_NR_POS_ENH2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Toulouse, FR; 20221114 - 20221118 7 November 2022 (2022-11-07), XP052222011, Retrieved from the Internet: URL:https://www.3gpp.org/ftp/TSG_RAN/WG1_R L1/TSGR1_111/Docs/R1-2211447.zip R1-2211447_OPPO_solution for SL Pos.docx [retrieved on 2022-11-07] * section 2.5 * ----- -/-- | 1-15 | TECHNICAL FIELDS SEARCHED (IPC) H04L H04W |

The present search report has been drawn up for all claims

| Place of search | Date of completion of the search | Examiner |
|---|---|---|
| The Hague | 28 June 2024 | Lähteenmäki, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches Patentamt
European Patent Office
Office européen des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Qualcomm Incorporated: "Potential Solutions for Sidelink Positioning", 3GPP DRAFT; R1-2212122; TYPE DISCUSSION; FS_NR_POS_ENH2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Toulouse, FR; 20221114 - 20221118 5 November 2022 (2022-11-05), XP052222685, Retrieved from the Internet: URL:https://www.3gpp.org/ftp/TSG_RAN/WG1_RL1/TSGR1_111/Docs/R1-2212122.zip R1-2212122 SL Solutions.docx [retrieved on 2022-11-05] * section 4.1 * | 1-15 | |
| A | OPPO: "Discussion on potential solutions for SL positioning", 3GPP DRAFT; R1-2206289, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Toulouse, France; 20220822 - 20220826 12 August 2022 (2022-08-12), XP052274222, Retrieved from the Internet: URL:https://ftp.3gpp.org/tsg_ran/WG1_RL1/TSGR1_110/Docs/R1-2206289.zip R1-2206289_OPPO_solution for SL Pos.docx [retrieved on 2022-08-12] * section 2.2 * | 1-15 | TECHNICAL FIELDS SEARCHED (IPC) |

-/--

The present search report has been drawn up for all claims

| Place of search | Date of completion of the search | Examiner |
|---|---|---|
| The Hague | 28 June 2024 | Lähteenmäki, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | APPLE INC: "Discussions on Potential solutions for SL positioning", 3GPP DRAFT; R1-2209589, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20221010 - 20221019 30 September 2022 (2022-09-30), XP052259062, Retrieved from the Internet: URL:https://ftp.3gpp.org/tsg_ran/WG1_RL1/T SGR1_110b-e/Docs/R1-2209589.zip R1-2209589 Discussions on Potential solutions for Sidelink positioning.docx [retrieved on 2022-09-30] * section 2.4.1 * ----- | 1-15 | |

TECHNICAL FIELDS
SEARCHED     (IPC)

The present search report has been drawn up for all claims

| Place of search | Date of completion of the search | Examiner |
|---|---|---|
| The Hague | 28 June 2024 | Lähteenmäki, Laura |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 2559

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2024

| Patent document cited in search report | Publication date | Patent family member(s) | Publication date |
|---|---|---|---|
| WO 2023011347 A1 | 09-02-2023 | CN 115706627 A | 17-02-2023 |
| | | EP 4358455 A1 | 24-04-2024 |
| | | KR 20240032066 A | 08-03-2024 |
| | | US 2024179667 A1 | 30-05-2024 |
| | | WO 2023011347 A1 | 09-02-2023 |

EPO FORM P0459

For more details about this annex : see Official Journal of the European Patent Office, No. 12/82